# EUROPEAN PATENT APPLICATION

(11) **EP 2 098 127 A1**
(43) Date of publication of application: **09.09.2009**
(21) Application number: 08102397.0
(22) Date of filing: 07.03.2008
(51) Int. Cl.: A23L 1/30, A23L 1/308, A23L 1/09, A23L 2/52, A23L 1/054, C12N 9/10, C12N 9/24, C12P 19/04, C12P 19/18

(54) **The use of alternan as ingredient for acidic foodstuffs**

(71) Applicant: Bayer CropScience AG, 40789 Monheim (DE)
(72) Inventor: Pilling, Jens, 44287 Dortmund (DE); Frohberg, Claus, 14532 Kleinmachnow (DE)
(74) Representative: Beyer, Andreas

(57) **Abstract**

The present invention is directed to the use of an alteman as a degradation-resistant ingredient for acidic foodstuffs and to a foodstuff comprising alteman as a degradation-resistant ingredient. Particularly, the present invention is directed to the use of an alternanoligosaccharide as a degradation-resistant ingredient for acidic beverages and to a beverage comprising alternan-oligosaccharide as a degradation-resistant ingredient.

## Description

The present invention is directed to the use of an alternan as a degradation-resistant ingredient for acidic foodstuffs and to a foodstuff comprising alternan as a degradation-resistant ingredient.

Alternan poly- or oligosaccharides are composed of glucose units. The glucose units are linked to each other via α-1,3- and α-1,6-glycosidic bonds, and said two types of bonds predominantly appear alternatingly.

Alternan-oligosaccharides have been described as prebiotic ingredients. US patent 7,182,954 discloses that oligosaccharides produced by an alternansucrase enzyme catalyzed reaction of sucrose with various acceptor sugars are effective as prebiotics for controlling enteric bacterial pathogens. Populations of enteropathogenic bacteria may be substantially reduced or inhibited by treatment of an animal with a composition comprising one or more of these oligosaccharides in an amount effective to promote the growth of beneficial bacteria (e.g. Lactobacilli, Bifidobacteria).

The publication WO2006088884 provides with methods of making substantially clear low-glycemic syrups (LGS) that comprise alternan oligosaccharides. These syrups have a relatively low glycemic index and are additionally useful in applications where increased clarity is desired. These qualities are particularly beneficial in foodstuff formulations.

However, the need persists for prebiotic food ingredients which retain their beneficial properties in low pH environments as it is the case in acidic foodstuffs, particularly acidic beverages.

Therefore, it is an object of the present invention to provide with a pH stable prebiotic and/or low glycemic and/or soluble fiber ingredient for foodstuffs.

A further object of the present invention is to provide with a pH and temperature-stable prebiotic and/or low glycemic and/or soluble fiber ingredient for acidic foodstuffs since foodstuffs are often processed at high temperatures.

The present invention is directed to the use of alternan as a degradation-resistant ingredient for acidic foodstuffs.

Alternan is deemed to have prebiotic properties (Lopez-Munguia et al Enzyme Microb, Technol. 15 (1993)). Other beneficial properties have been described. According to US 5,702,942 and US 5,789,209 altemans have unique properties that resemble certain functional characteristics of gum arabic, maltodextrins or polydextrose (G. L. Cote, Carbohydrate Polymers 19:249-252 (1992)). Moreover, according to US 5,702,942 and US 5,789,209 alternan has potential commercial applications as a low-viscosity bulking agent and extender in foods and cosmetics, so that altemans have potential value as noncaloric, carbohydrate-based soluble food additives.

In the present invention it is shown that alternan is not degraded in acidic environment and could therefore retain the above-mentioned properties when added to acidic foodstuff, particularly acidic beverages. In similar manner, the low glycemic properties and soluble fiber properties of alternan are retained in acidic foodstuffs, since no glucose is released from the alternan molecules.

The term "alteman" according to the present invention encompasses alteman-polysaccharide and alteman-oligosaccharide, wherein both types of alteran differ in their molecular weights, as further defined below.

Alternan according to the present invention is a saccharide composed of glucose units. The glucose units are linked to each other via α-1,3- and α-1,6-glycosidic bonds, and said two types of bonds predominantly appear alternatingly. Alternan may contain branches (Seymour et al., Carbohydrate Research 74, (1979), 41-62).

Alternan-polysaccharide according to the definition of the present invention has a weight average molecular weight Mw of more than 3 000 g/mol, preferably more than 5 000 g/mol (determined with GPC RI or GPC MALLS). In another preferred embodiment, alteman-polysaccharide has a weight average molecular weight Mw in the range of 10 000 000 g/mol to 60 000 000 g/mol (determined with GPC MALLS), more preferably in the range of 12 000 000 g/mol to 50 000 000 g/mol. In a special embodiment, alteman-polysaccharide is produced with alternansucrase originating from Leuconostoc Mesenteroides as described in WO 00/47727 and shows a weight average molecular weight Mw in the range of 33 000 000 g/mol to 60 000 000 g/mol (determined with GPC MALLS), more preferably in the range of 33 000 000 g/mol to 50 000 000 g/mol. In still another special embodiment, alteman-polysaccharide is produced with truncated alternansucrase enzyme as described in PCT/EP2008/051760 and shows a weight average molecular weight Mw in the range of 12 000 000 g/mol to 30 000 000 g/mol (GPC MALLS), more preferably in the range of 14 000 000 g/mol to 28 000 000 g/mol, still more preferably in the range of 16 000 000 g/mol to 26 000 000 g/mol, most preferably 19 000 000 g/mol to 23 000 000 g/mol. Truncated alternansucrase enzymes, methods for producing alteman-polysaccharide therefrom as well as the alteman-polysaccharide itself are described in PCT/EP2008/051760, which is incorporated herein by reference in its entirety.

The weight average molecular weight Mw of alternan-oligosaccharide in the definition of the present invention is 3 000 g/mol or below, preferably 2 500 g/mol or below, more preferably 2 000 g/mol or below, most preferably 1 500 g/mol or below (determined with GPC RI or GPC MALLS). Thus the weight average degree of polymerization DPw of alternan oligosaccharide according to the invention is 18 or below, preferably 15 or below, more preferably 12 or below, most preferably 9 or below (DPw = Mw/162 g/mol, 162 g/mol = molecular weight of monomeric glucose unit).

Alternan-oligosaccharide of the present invention predominantly consists of alternan molecules having a degree of polymerization in the range of 3 - 20, wherein minor amounts of molecules with a higher DP might be present. In a preferred embodiment, alternan-oligosaccharide according to the invention consists of molecules having a degree of polymerization (DP) in the range of 3 - 15, more preferably in the range of 3 - 12, still more preferably in the range of 3 - 10, and most preferably in the range of 3 - 8.

In the present invention the singular-term "alteman-polysaccharide" designates both monodisperse alteman-polysaccharides with molecules of only one degree of polymerization (DP) as well as polydisperse alteman-polysaccharides with molecules having different degrees of polymerization.

In the present invention the singular-term "alteman-oligosaccharide" designates both monodisperse alternan-oligosaccharides with molecules of only one degree of polymerization (DP) as well as polydisperse alternan-oligosaccharides with molecules having different degrees of polymerization.

Alternan-oligosaccharides are wellknown from the state of the art and for example disclosed together with manufacturing processes in WO 00/47727, US 7,182,954 WO 2006/088884, and Cote and Robyt 1982, Carbohydrate Research, 111:127-142 which are incorporated by reference in their entirety in the present description.

Alternan-oligosaccharides can be produced from alternan polysaccharides by degradation of alternan polysaccharides under appropriate conditions. The degradation can for example be an enzymatic degradation of alternan polysaccharides or a degradation under acidic conditions, preferably with heating.

Alternan-oligosaccharides can also be produced by the reaction of sucrose with an acceptor molecule in presence of alternansucrase enzyme, which is preferred according to the present invention.

Alternan-oligosaccharides may be prepared by a method, wherein
a) a sucrose containing solution is contacted with a catalytically effective amount of alternansucrase enzyme and acceptor molecules under conditions permitting the conversion of sucrose to alternan-oligosaccharide and fructose; and
b) alternan-oligosaccharide and fructose are isolated from the solution.

The reaction may be conducted between room temperature and 37°C and at a pH between about 5 and 7, and may be allowed to proceed until the sucrose has been essentially consumed. Detailed reaction conditions are disclosed in WO 00/47727, US 7,182,954 and in the appended example. The product is usually obtained as a syrup which may further be purified, i.e. by membrane filtration, and/or dried.

The acceptor molecule is understood to mean a molecule at which an alternansucrase is able to catalyze a chain-extending reaction. The acceptor which can be added to the reaction mixture at the beginning of the reaction is preferably a carbohydrate or a carbohydrate derivative. The use of external acceptors leads to the production of low molecular alteman-oligosaccharides. The carbohydrate acceptor is preferably a saccharide selected from the group consisting of maltose, isomaltose, maltitol, (iso)maltotriose and methyl-α-D-glucan. Other preferred acceptor molecules are glucose, gentiobiose, raffinose, melibiose, isomaltitol, isomaltooligosaccharide, theanderose, kojibiose, glucosyl trehaloses, cellobiose, maltotetraose, nigerose, lactose, panose or mixtures thereof.

Depending upon the particular acceptor selected, the glucosyl units will generally be added through an α(1,6) linkage, or through an α(1,3) linkage if an α(1,6) linkage is already present. Alternan-oligosaccharides are obtained which have a lower molecular weight than the alternan that can be prepared in the absence of external acceptors. The reaction will typically produce a mixture of oligosaccharides having different degrees of polymerization (DP). If alternan-oligosaccharides are produced by the reaction of sucrose with an acceptor molecule, the degree of polymerization (DP) is defined as the number of D-glucosyl units added onto the original acceptor molecule plus the number of monosaccharide units in the original acceptor oligosaccharide.

The extent of the degree of polymerization may vary with the concentrations and the relative ratio of sucrose and acceptor oligosaccharide. The reaction product will generally be composed of a mixture of oligosaccharides having different degrees of polymerization. At a relatively high sucrose:acceptor ratio, more glucosyl units are transferred into glucan and products with higher degree of polymerization are obtained (i.e. the relative amounts of the high DP oligosaccharides in the product will be increased). In contrast, at a low sucrose:acceptor ratio, the predominant reaction product is that resulting from the transfer of a single glucosyl unit to the acceptor. Thus, the yields of oligosaccharides of a desired degree of polymerization may be optimized by varying the sucrose:acceptor ratio. The precise sucrose:acceptor ratios for a desired degree of polymerization will vary with the particular acceptor oligosaccharide and may be readily determined by routine experimentation.

Alternansucrase for use herein may be obtained from a variety of microorganisms, preferably strains of Leuconostoc and particularly strains of L. mesenteroides, as for example disclosed in WO 00/47727. In a preferred embodiment, the enzyme is produced by strains of which secrete a high proportion of alternansucrase to dextransucrase such as described by Leathers et al., U.S. Pat. No. 5,702,942, the contents of which are incorporated by reference herein. In another preferred embodiment the alternansucrase enzymes that can be used to produce alternan-oligosaccharides include Leuconostoc mesenteroides strains NRRL B 1355, 23185, 23186, 23188, 23311, 21297, 30821, 30894 These enzymes can be additionally cloned and expressed recombinantly, such as described in Gilles Joucla, Doctoral Dissertation, Ingenier INSA, Toulouse, France, 2003.

Production of the alternansucrase may be conducted by culture of any of the above-mentioned microorganisms using conventional techniques and under aerobic conditions which are effective to promote growth and production of the enzyme such as described in Leathers et al. or the example herein below. Following culture, the enzyme may be isolated or separated from the microorganisms using conventional techniques, such as by centrifugation or filtration.

The term "degradation-resistant" in the present invention means that the degree of polymerization of alternan does not measurably (High performance anion-exchange chromatography - HPAEC or Gel permeation chromatography - GPC-RI) decrease in acidic environment of pH 3, over a time period of at least 3 weeks when the sample is stored at room temperature (20°C).

However, alternan oligosaccharide turned out to be even more stable. Alternan oligosaccharide does not measurably (High performance anion-exchange chromatography - HPAEC or Gel permeation chromatography - GPC-RI) decrease in acidic environment of pH 6 or below, preferably pH 3 or below, over a time period of at least 8 weeks when the sample is stored at a temperature of up to 32°C.

A main product of degradation of alternan is glucose and the degradation mechanism normally takes place by hydrolysis of alternan chains. Because of its degradation-resistance, alternan is excellently suitable as a degradation-resistant prebiotic and/or low glycemic and/or soluble fiber ingredient for acidic foodstuffs. Moreover, all other beneficial properties of alternan that have been described in the prior art are retained due its degradation resistance.

The term "foodstuff" as used herein also encompasses beverages and the term "acidic foodstuffs" also encompasses "acidic beverages". The acidic foodstuff is defined as a foodstuff having a pH below 7. The acidic foodstuff has preferably a pH of 6 or below, more preferably a pH of 3.5 or below. In still another preferred embodiments the acidic foodstuff has a pH in the range of 1 - 6, more preferably 1 - 5, still more preferably 1 - 4 and most preferably 1.5 - 3.5. Another advantageous pH range is pH 3 - 6.

In a highly preferred embodiment, the acidic foodstuff is an acidic beverage and alternan-oligosaccharide is used as ingredient in the beverage. The acidic beverage has preferably a pH of 6 or below, more preferably a pH of 3.5 or below. In still another preferred embodiments the acidic beverage has a pH in the range of 1 - 6, more preferably 1 - 5, still more preferably 1 - 4 and most preferably 1.5 - 3.5. Another advantageous pH range is pH 3 - 6.

Another beneficial property of alternan is degradation-resistance in acidic environment even at elevated temperatures

In the present invention it is shown that alternan polysaccharide is only degraded to a minor amount in aqueous environment of pH 3-4 when heated to a temperature of up to 60°C for 1 hour. Alternan polysaccharide is deemed to be substantially stable even at 70°C under these conditions. Thus, alternan-polymer is a suitable as a degradation-resistant ingredient for acidic foodstuffs with pH 3 as a lower pH limit, which are subjected to a heating step at a temperature of up to 60-70°C. Degradation is detected by increase of glucose (High performance anion-exchange chromatography - HPAEC or Gel permeation chromatography - GPC-RI) in a heated sample as degradation product of alternan-polymer.

Alternan-oligosaccharide turned out to be even more stable. In the present invention it is shown that alternan-oligosaccharide is not measurably degraded in aqueous environment of pH 3 or above when heated to a temperature of up to 120°C for 1 hour. In aqueous environment of pH 1.5 alternan-oligosaccharide is not measurably degraded when heated to a temperature of up to 95°C for 1 hour. No measurable degradation in this context means that no increase of glucose is detected (High performance anion-exchange chromatography - HPAEC or Gel permeation chromatography - GPC-RI) in a heated sample as degradation product of alternan-oligomers.

This property of alternan-oligosaccharide is particularly and without limitation beneficial in the manufacturing process of a beverage since the beverages are sometimes heated to higher temperatures during the process. Some beverage processes call for hot filling. This involves heating the beverage to 80-90°C, holding for about 10 minutes at that temperature, cooling to about 65°C and then bottling. The alternan-oligosaccharide can withstand this heat abuse for at least about 10 minutes without visible effects.

The invention is further directed to acidic foodstuffs comprising alternan as a degradation-resistant prebiotic and/or low glycemic and/or soluble fiber ingredient. Preferred acidic foodstuffs are selected from fruits, vegetables, canned foodstuffs, especially canned fruits, canned fish, canned vegetables, bakery products, cake, ready to serve meals, dairy products, as yogurt and buttermilk, and acidic beverages.

Alternan is preferably added to the foodstuff according to the invention in an amount of 0.1-20 weight-% based on the total weight of the foodstuff, more preferably in an amount of 0.1-10 weight-%, still more preferably in an amount of 0.1-5 weight-%.

The acidic foodstuff is in a highly preferred embodiment an acidic beverage with a pH in the range as defined above, which contains alternan-oligosaccharide as ingredient. The beverage is preferably selected from fruit juices, energy drinks, lemonades, sherbets, sodas, soft drinks, and flavored waters.

The beverage according to the invention is preferably a clear beverage. Besides its degradation resistance, a further beneficial property of alternan-oligosaccharide is its ability to retain the clarity of a clear beverage when it is added to a clear beverage formulation as a prebiotic and/or low glycemic and/or soluble fiber ingredient. Clarity can be determined using the test procedure described in WO2006/088884 or evaluated visually on a qualitative basis, as shown in the appended examples.

In another aspect, the invention provides with methods for manufacturing an acidic beverage as described above. In one method for manufacturing a beverage, alternan-oligosaccharide is blended with other ingredients to form a premix which is subsequently added to the water basis of the beverage. Alternan-oligosaccharide can be blended with one or more further ingredients such as vitamins, minerals, sugar alcohols, high intensity sweeteners, flavors, flavor enhancers, acids, as citric acid or malic acid, and conventional sweeteners. In another embodiment only alternan-oligosaccharide added to the ready made beverage. In principle, all manufacturing methods for beverages which are known to an expert skilled in the art can be employed without limitation.

The following examples are merely intended to further illustrate the invention and are not intended to limit the scope of the invention which is defined by the claims.

### Examples

### Literature:

- Arguello-Morales MA, Remaud-Simeon M, Pizzut S, Sarcabal P, Willemot R and Monsan P (2000) Sequence analysis of the gene encoding alternansucrase, a sucrose glucosyltransferase from Leuconostoc mesenteroides NRRL B-1355. FEMS Microbiol Lett 182: 81-85.
- Degenkolb J, Takahashi M, Ellestad GA, Hillen W, 1991:Antimicrob. Agents Chemother. 35, No 8, 1591-1595 Structural requirements of tetracycline-Tet repressor interaction: Determination of equilibrium binding constants for tetracycline analogues with the Tet repressor.
- Dotto GP, Horiuchi K, Zinder ND (1982) Initiation and termination of phage f1 plus-strand synthesis. Proc Natl Acad Sci U S A. 79:7122-7126.
- Horn, U., Strittmatter, W., Krebber, A., Knüpfer, U., Kujau, M., Wenderoth, R., Müller, K., Matzku, S., Plückthun, A., and Riesenberg, D. (1996) High volumetric yields of functional dimeric miniantibodies in Escherichia coli, using an optimized expression vector and high-cell-density fermentation under non-limited growth conditins. Appl. Microbio. Biotechnol. 46, 524-532.
- Jeong SH, Bae IK, Lee JH, Sohn SG, Kang GH, Jeon GJ, Kim YH, Jeong BC and Lee SH. (2004) Molecular Characterization of Extended-Spectrum Beta-Lactamases Produced by Clinical Isolates of Klebsiella pneumoniae and Escherichia coli from a Korean Nationwide Survey. J Clin Microbiol 42: 2902-2906.
- López-Muguía, A., Pelenc, V., Remaud, M., Biton, J.1, Michel, J.M., Lang, C., Paul, F., Monsan, P. (1993). Production and purification of alternansucrase, a glucosyltransferase from Leuconostoc mesenteroides NRRL B-1355, for the synthesis of oligoalternan: Enzyme Microb. Technol., 15, 77-85.
- Schmidt TGM and Skerra A (1993). The random peptide library-assisted engineering of a C-terminal affinity peptide, useful for the detection and purification of a functional Ig Fv fragment. Protein Eng 6: 109-122.
- Skerra, A (1994). Use of the tetracycline promoter for the tightly regulated production of a murine antibody fragment in Escherichia coli. Gene 151, 131-135.

### 1. Fermentative production of alternansucrase from Leuconostoc mesenteroides

For heterologous expression of the alternansucrase (ARS) from Leuconostoc mesenteroides strain NRRL B-1355, the gene encoding alternansucrase has been isolated, fused to a Strep-tag (IBA BioTAGnology, Göttingen, Germany) and cloned into vector pAI-B-AlSu under the control of a tetraycline-inducible promoter.

The genetically modified E. coli strain DH5a pAIB-AlSu Q29 employed for fermentation harbours plasmid pAI-B-AlSu for cytoplasmic expression of alternansucrase from Leuconostoc mesenteroides. Vector pAI-B-AlSu is essentially derived from plasmid pASK-IBA-3 (purchased from IBA Göttingen; www.iba-go.com). It contains the coding sequence of alternansucrase derived from Leuconostoc mesenteroides strain NRRL B-1355 fused to a 8 aminoacid peptide strep-tag at the C-terminal end. The strep-tag is linked to the protein through a 2 aminoacid linker. Expression of alternansucrase is under the transcriptional control of the tetA promoter/operator and repressor. The tetA promoter is tightly regulated by the tet repressor which is encoded on the same plasmid and is constitutively expressed from the β-lactamase promoter. In this way, expression of alternansucrase is stringently repressed until efficient chemical induction by tetracycline or anhydrotetracycline, AHT, (Degenkolb et al.; 1991).

Vector pAI-B-AlSu contains the following genetic elements:

| Nt Positions | Orientation | Origin |
|---|---|---|
| 37-72 | Clockwise | PTet: Tet Promoter from transposon Tn10 (Skerra, 1994) |
| 139-6309 | Clockwise | asrLm: Coding sequence of the Altemansucrase gene from *Leuconostoc mesenteroides* NRRL B-1355. (Arguello-Morales *et al.,* 2000) |
| 6310-6315 | Clockwise | SA linker encoding 2 Amino Acids: Serine and Alanine |
| 6316-6345 | Clockwise | StrepTag: sequence encoding a 8 AA peptide selected from a genetic fusion peptide library for its ability to bind to streptavidin (Schmidt and Skerra, 1993) |
| 6439-6877 | Clockwise | f1 origin: origin of replication from filamentous phage f1 (Dotto *et al.,* 1982) |
| 7026-7886 | Clockwise | AmpR: Coding sequence of β-lactamase from Escherichia coli, conferring Ampicillin resistance (Jeong *et al.,* 2004) |
| 7896-8519 | Clockwise | TetR: Tet repressor domain from Transposon Tn10 (Skerra, 1994) |

For fermentation, vector pAI-B-AlSu is transformed in E. coli K12 DH5α and bacterial cells harbouring the vector are selectively grown for 12 h at 37°C to an OD600 of 65 in mineral medium (Horn et al., 1996) supplemented with ampicillin (100 µg/ml). Expression of the alternansucrase is induced by the addition of anhydrotetracyclin (0.2 mg/l) and further cultivation for 5 h at 25°C to an OD600 of 140. For purification of the enzyme, the bacterial cells are harvested by centrifugation (20000 rpm; 20 min) and solubilized in resuspension buffer (100 mM NaAc, pH 5.3).

The cells are disrupted using a high pressure homogenizer (two cycles, 1200 bar). Bacterial nucleic acid is degraded by DNase/RNase (3 mg/l) treatment and the resulting extract is centrifuged (3,800 g for 15 min at 4°C) to harvest the insoluble cell matter including the bacterial inclusion bodies.

The supernatant is discarded and the pellet is resuspended 8 M urea, 50 mM NaAc buffer, pH 5.3 and kept on ice while shaking for one hour. Subsequently, the remaining debris is removed by centrifugation at 10.000 g for 15 min. Renaturation is then performed by 20-fold dilution in 0.5 M urea, 2.5 mM CaC12, 100 mM NaAc, pH 5.3. Aliquots of the mixture are immediately frozen in liquid nitrogen and stored at -20 °C.

Activity of alternansucrase can be determined as described by Lopez-Munguia et al., 1993.

### 2. Production of alternan-oligosaccharides with acceptor molecule maltose (maltose oligosaccharides)

For the production of maltose oligosaccharides, the purified alternansucrase enzyme as described in 1 is incubated with 10 % sucrose (w/v) and 4.5-5% maltose (w/v) in a 50 mM sodium acetate buffer pH 5.3 at room temperature for approximately 72 hours. For the incubation, 50 units of alternansucrase per litre reaction mix are used. Alternan, which accumulates as a by-product, is precipitated by adding analytical grade ethanol to a final concentration of 50 % (v/v). The mixture is centrifuged at 4000 rpm for 10 min and the resulting precipitate is discarded.

Maltose oligosaccharide is prepared by further concentrating the obtained precipitate using a vacuum vaporizer (Buechi Rotavapor R-220) to about 70° brix. Maltose oligosaccharide is obtained as a syrup which is further purified and dried to obtain the final product.

### 3. Production of alternan-polysaccharide

Plasmid pAI-B-AlSu Q29 (cf. Example 1 above) was transformed in E. coli DH5α. The cells were pre-cultured in mineralmedium (Horn et al., 1996) with 100 µg/ml Ampicillin and 10% LB medium. Mineralmedium, without LB, was inoculated with this pre-culture. The cells were grown at 37°C, induced with Anhydrotetracyclin (AHT) (0.2 mg/L), and grown further at 25°C. The cells were harvested, resuspended in [10 mM MOPS pH 7,6; 2,5 mM CaCl2 und 0,05 % Trition X-100] and extracted with a high pressure homogenisator. The cell lysate was centrifuged at 20 000 rpm for 20 minutes at 4°C. The supernatant was filtered over a 0.22 µm filter.

Alternan was produced in a 60 L Biotransformation containing 0.13% Acetic Acid, 100 mM NaAc pH5.3, 20% Sucrose, 1 mM DTT, 1600 ml filtered protein extract (ca. 3900 Units). The reaction mixture was incubated for 60h. at 37°C. The polymer was precipitated with 60L Technical Ethanol 40 h 4°C, washed 2x with 60 L 60% Technical Ethanol, and 1x with 60 L 60% Ethanol Absolute. The product was dried through lyophilization

### 4. Application testing in flavored waters

Two retail flavored waters were testes in an application study. Alternan-oligosaccharide (also designated hereinafter as "maltose oligosaccharide" because auf maltose acceptor) produced as described in Example 2 was used for the tests.

| Beverage Name | pH | Comments |
|---|---|---|
| Metro Mint® (Soma Beverage Co.) | 5.87 | Clear, colorless |
| Fruit2O® (Kraft) | 3.02 | Clear, colorless |

### Set Up

- Storage Temperatures: -17.8°C, 4.4°C, 21°C, 32.2°C
- Evaluation Points: 0 Time, 1 Week, 4 Weeks, 8 Weeks

### Beverage Production

- Alternan-oligosaccharide was combined with the flavored waters in a large batch.
- Alternan-oligosaccharide was added to the water while agitating with a Lightning Mixer at 700 rpm. After the entire amount of alternan-oligosaccharide was added, the beverage was mixed for an additional 1.5 minutes.
- The percentages used in the preliminary screening were used for the shelf life. Each variable is present at a level to give a 5 gram per serving level of fiber.
- After mixing, the beverage was aliquoted to separate bottles for storage. The bottles were placed in storage at each temperature.
- One bottle was used for each evaluation point.
- The samples were allowed to come to room temperature before evaluation.

The following protocols were used to evaluate the beverages at each interval in the shelf life study.

### 4.1 Specific gravity - BRIX

- Bausch & Lomb Abbe-3L Refractometer
- Samples were always at room temperature so temperature control was not used.

The brix of the beverages containing maltose-oligosaccharide did not change during the shelf life period of 8 weeks at different storage temperatures (-17.8°C, 4.4°C, 21°C, 32.2°C). Even when precipitation was noted, the brix was not significantly affected. Beverages were always shaken before measurement.

### 4.2 Color

- 200 ml sample size in 250 ml Pyrex beaker.
- White filter paper was placed over the top of the beaker
- Readings were taken through the bottom of the beaker making sure that the glass was clean.
- Color was evaluated visually and comments made.

The maltose-oligosaccharide did not develop significant color over the shelf life. The maltose-oligosaccharide sample in 32,2°C storage did show a very light yellow color at 8 weeks in the acidic beverage.

### 4.3 Turbidity and formation of precipitate

Turbidity and precipitation was evaluated visually in the samples over the shelf life, with samples stored at different temperatures.

Maltose-oligosaccharide did cause a slight cloudiness in both water systems. The turbidity did not appear to be significantly affected by time and or temperature.

| | Average Cloudiness Score | Comments |
|---|---|---|
| maltoseoligosaccharide | 0.5 to 1.0 | very slight. |

| | | |
|---|---|---|
| Scale: 0 = clear, 1= slight, 2 = slight + , 3 = moderate, 4 = moderate +, 7 = very heavy | | |

The maltose-oligosaccharide did not form a precipitate under any of the storage conditions.

### 4.4 Hot Fill Simulation - Abuse Condition

Some beverage processes call for hot filling. This involves heating the beverage to 82°C, holding for 10 minutes at that temperature, cooling to 65°C and then bottling. The maltose-oligosaccharide beverages were exposed to this heat abuse.

### Process

- 500 ml of a 2.60% solution of maltose-oligosaccharide in Metro Mint or Fruit₂O water was placed in the top of a double boiler.
- Heated to between 82°C and 87.8°C
- Held for 10 minutes at that temperature
- Cooled liquid to 65.6°C
- Bottled
- Beverages observed for 72 hours. Measured for viscosity, pH, and Brix.

**Results:**

| | Viscosity (cp) | pH | Brix | Comments |
|---|---|---|---|---|
| Fruit₂O Control | 2.16 | 2.89 | 2.8 | |
| Fruit₂O Hot fill | 2.16 | 2.94 | 3.0 | No obvious change in appearance. |
| Metro Mint Control | 2.13 | 3.95 | 2.9 | |
| Metro Mint Hot Fill | 2.19 | 4.17 | 2.9 | No obvious change in appearance. |

The maltose-oligosaccharide was tolerant to the hot fill conditions tested.

### 4.5 Resistance to degradation

For the measurements all samples were diluted (total starting volume 1 ml) und neutralized if necessary (Fruit2O: + 100µl 150mM NaOH).
High performance anion-exchange chromatography - HPAEC: 1:100; injection volume: 25µl; HPAEC-PAD: glucan program 45min
Gel permeation chromatography - GPC: Metromint: 1:5 with DMSO, Fruit2O samples (after neutralisation) 1:2.5

### Results:

In the GPC profile no change was detected over the shelf life of the sample (8 weeks).

HPAEC: no changes were detected in fractions over DP3. In Metromint a slight increase in glucose over shelf life was detected at 32.2°C. In Fruit2O sucrose decreased and glucose and fructose increased during shelf life at 32.2°C

| Metromint | | | Fruit2O | | |
|---|---|---|---|---|---|
| storage temperature/time | M_{w} g/mol | DP | storage temperature/time | M_{w} | DP |
| -17.8°C / 0 weeks | 920 | 6 | -17.8°C / 0 weeks | 896 | 6 |
| -17.8°C / 1 week | 916 | 6 | | | |
| -17.8°C/ 4 weeks | 910 | 6 | -17.8°C/4weeks | 895 | 6 |
| | | | -17.8°C / 8 weeks | 898 | 6 |
| | | | | | |
| 32.2°C / 0 weeks | 909 | 6 | 32.2°C / 0 weeks | 901 | 6 |
| 32.2°C / 1 week | 906 | 6 | 32.2°C / 1 week | 900 | 6 |
| 32.2°C / 4 weeks | 909 | 6 | 32.2°C / 4 weeks | 903 | 6 |
| 32.2°C / 8 weeks | 910 | 6 | 32.2°C / 8 weeks | 938 | 6 |

| | | | | | |
|---|---|---|---|---|---|
| In DP calculations 162 g/mol was used as MW of monomer | | | | | |

### 5. Resistance to degradation in carbonated beverages

Three retail beverages (Coca Cola®, Fanta® and Orange lemonade) were prepared with alternan-oligosaccharide (also designated as maltose-oligosaccharide because of maltose acceptor molecule) and competitive products for the shelf life screening.

Maltose-oligosaccharide was produced according to a procedure similar to Ex. 2, except that 30% sucrose and 15% maltose were used and the ethanol precipitation step was omitted. The product was purified by filtration techniques and maltose-oligosaccharide was obtained as a syrup containing about 15 weight-% fructose.

### Set Up

- Storage Temperatures: 4°C, RT (24°C), 37°C
- Evaluation Points: 0 time, 4 days, 1 week, 2 weeks, 4 weeks, 8 weeks

### Beverage Production

- Maltose-oligosaccharide was combined with the beverage in 50g batch.
- 2.5% of maltose-oligosaccharide was used in the screening. Maltose-oligosaccharide was added to the beverage in a 50ml Falcon. After the entire amount of fiber 5g of water was added and the beverage was mixed.
- After mixing, the 50g batch was distributed to small beverage amounts (ca. 3g) and put in small bottles. Those small bottles were used for the shelf life storage at the different conditions.
- One bottle was used for each evaluation point.
- After each storage time the samples were visually evaluated and then frozen at -18°C for GPC-RI and HPAEC-PAD measurement.

### GPC-RI and HPAEC-PAD results:

The beverages have been measured for degradation of maltose-oligosaccharide using GPC-RI and HPAEC-PAD at BBS. In none of the three beverages maltose-oligosaccharide showed any degradation during storage over the investigated time range at the different temperatures. The only alteration was to be seen in sucrose content. This effect was most drastic in beverages with lowest pH at 37°C (Coca Cola® and Fanta®). Sucrose content of orange lemonade also decreased, but to a lower amount.

### 6. Heat and acid stability of alternan-oligosaccharide

Material: Maltose-oligosaccharide was produced according to a procedure similar to Ex. 2, except that 30% sucrose and 15% maltose were used and the ethanol precipitation step was omitted. The product was purified by filtration techniques and maltose-oligosaccharide was obtained as a syrup containing about 15 weight-% fructose, 68.8° BRIX (internal reference M2).

The alternan-oligosaccharide contained about 15 weight-% of fructose. For preparation of samples all amounts were calculated in such manner that > 5% pure maltose-oligosaccharide was contained in the final sample.

### Samples:

- alternan-oligosaccharide in 0.1M HAc - pH 3
- alternan-oligosaccharide in 0.02M HCl - pH 1.5

The samples were incubated for 10 minutes at temperatures of 20, 40, 60, 80, and 95°C, respectively, 1 hour at 120°C, and then cooled down for 10 min. 100 µl volumes were taken from each sample and neutralized:
0.1M HAc: 100µl + 100µl N-Mix HAc (450µl 1M NaOH ad 10ml)
0.02M HCl: 100µl + 100µl N-Mix HCl (175µl 1M NaOH ad 10ml)

For HPAEC-analysis 50µl of a 1:400 dilution of the neutralized sample were injected (SC-HPAEC).

The following table shows the relative peak areas of alternan-oligosaccharides.

The results show that no degradation of oligosaccharides (DP 3-7) is detectable up to a temperature of 120°C in water and acetic acid (pH 3). In HCl (pH 1.5) no degradation is detectable up to a temperature of 95°C. No increase of glucose was detected (data not shown).

At a temperature of 120°C in HCl degradation was detected, shown by increase of detected glucose (data not shown) and shown by the decrease of relative peak area of DP4 - DP7 (see table).

However, it should be taken into account that the 120°C sample was heated for one hour due to technical reasons (autoclave), which is much longer than for the other samples (10 min).

**Results pH and temperature-stability of alternan-oligomer**

| | rel. area (%) | | | | | | |
|---|---|---|---|---|---|---|---|
| Sample Name | Panose | DP4-1 | DP4-2 | DP5 | DP6-1 | DP6-2 | DP7 |
| M2 H2O 20°C | 0.257 | 0.066 | 0.313 | 0.270 | 0.023 | 0.052 | 0.020 |
| M2 H2O 40°C | 0.257 | 0.066 | 0.313 | 0.269 | 0.023 | 0.052 | 0.019 |
| M2 H2O 60°C | 0.257 | 0.067 | 0.313 | 0.269 | 0.023 | 0.052 | 0.019 |
| M2 H2O 80°C | 0.260 | 0.057 | 0.317 | 0.271 | 0.023 | 0.052 | 0.019 |
| M2 H2O 95°C | 0.257 | 0.067 | 0.314 | 0.269 | 0.023 | 0.052 | 0.019 |
| M2 H2O 120°C | 0.255 | 0.075 | 0.311 | 0.267 | 0.022 | 0.051 | 0.019 |
| | | | | | | | |
| M2 HAc 20°C | 0.257 | 0.066 | 0.313 | 0.270 | 0.023 | 0.052 | 0.019 |
| M2 HAc 40°C | 0.259 | 0.057 | 0.316 | 0.272 | 0.023 | 0.052 | 0.020 |
| M2 HAc 60°C | 0.257 | 0.066 | 0.314 | 0.269 | 0.023 | 0.052 | 0.019 |
| M2 HAc 80°C | 0.257 | 0.066 | 0.314 | 0.269 | 0.023 | 0.051 | 0.019 |
| M2 HAc 95°C | 0.257 | 0.066 | 0.313 | 0.269 | 0.023 | 0.052 | 0.019 |
| M2 HAc 120°C | 0.260 | 0.065 | 0.314 | 0.268 | 0.022 | 0.051 | 0.019 |
| | | | | | | | |
| M2 HCl 20°C | 0.257 | 0.066 | 0.313 | 0.270 | 0.023 | 0.052 | 0.019 |
| M2 HCl 40°C | 0.256 | 0.066 | 0.314 | 0.269 | 0.023 | 0.052 | 0.019 |
| M2 HCl 60°C | 0.257 | 0.066 | 0.314 | 0.269 | 0.023 | 0.051 | 0.019 |
| M2 HCl 80°C | 0.260 | 0.057 | 0.317 | 0.271 | 0.023 | 0.052 | 0.020 |
| M2 HCl 95°C | 0.260 | 0.066 | 0.312 | 0.268 | 0.023 | 0.052 | 0.019 |
| *M2 HCl 120°C* | *0.397* | *0.055* | *0.258* | *0.229* | *0.018* | *0.031* | *0.012* |

### 7. Heat and acid stability of alternan-polysaccharide

| Method 1: | |
|---|---|
| material: | alternan-polymer was prepared in concentrations of 1%, 5%, 10% or 12% |
| environments: | water (pH 6-7), acetic acid (pH 3.5-5), orange lemonade (pH 3) or hydrochloric acid (pH 1.3-1.5) |
| temperatures: | room temperature (20°C, RT), 40°C, 60°C, 80°C, 95°C, in autoclave only: 120°C |
| incubation times: | 0.5 h, 1 h, 4 h, 24 h and 2-3 weeks |

| Method 2: | |
|---|---|
| material: | alternan-polymer was prepared in concentrations of 1.25% and 2.5% in orange juice |
| environments: | orange juice (pH 4) |
| procedure A: | alternan is added to cold orange juice, heating to 62.8 - 65.6°C, pasteurization for 30 min at 62.8°C |
| procedure B: | alternan is added to preheated orange juice, (62.8°C), pasteurization for 30 min at 62.8°C |

storage in refrigerator for 1, 3, 7, 10, 20, 30 and 60 days

Analysis for both methods was done with GPC MALLS. Results are presented in the following table.

The results show that alternan-polymer is stable at pH 6-7, even when heated. At pH 3-4 alternan-polymer is stable at room temperature. Slight degradation is detected at pH 3-4 when alternan-polymer is heated at 60°C. Considerable degradation is detected at pH 3-4 when alternan-polymer is heated at 80°C.

**Results pH and temperature-stability of alternan-polymer**

| **pH** | **T (°C)** | **Conc. (%)** | **incubation** | **Reduction of molar mass*** | **degradation %*** |
|---|---|---|---|---|---|
| 6-7 | RT | 5; 10 | 2 weeks at RT | - | none |
| 3-4 | RT | 5; 10 | 3 weeks at RT | - | none |
| 1-1.5 | RT | 5; 10 | 3 weeks at RT | 45% | strong degradation |
| 6-7 | 95 | 1;5;10;12 | 0.5-1h | - | none |
| 3-4 | 20 - 95 | 5 | 1h | 20% to 60% | at 60°C slight degradation, strong degradation at 80°C and higher |
| 1-1.5 | 20-95 | 5 | 1 h | 28% to 98% | at 60°C strong degradation, very strong degradation at 80°C and higher |
| | | | | | |
| 4.0 | 62 - 65 | 1.25; 2.5 | 30 min, then stored at 4°C for 1 to 60 days | - | none |
| | | | | | |
| 6-7 | 120 | 1; 5;10 | 20 min | - | none |
| 6-7 | 120 | 1; 5;10 | 1h | 14%* | none* |
| 3-4 | 120 | 5;10 | 1h | 95% | very strong degradation |
| 1-1.5 | 120 | 5;10 | 1h | not evaluable | - |

| | | | | | |
|---|---|---|---|---|---|
| * error is about 14%, therefore degradation can not be evaluated when molar mass is reduced by less than 15% | | | | | |

## Claims

1. Use of alternan as a degradation-resistant ingredient for acidic foodstuffs.

2. Use according to claim 1 wherein the alternan is an alternan-polysaccharide.

3. Use according to claim 1 wherein the alternan is an alternan-oligosaccharide.

4. Use according to claim 3 wherein the alternan-oligosaccharide is produced by the reaction of sucrose with an acceptor molecule in presence of alternansucrase enzyme.

5. Use according to claim 4 wherein the acceptor molecule is selected from maltose, isomaltose, maltitol, (iso)maltotriose and methyl-α-D-glucan.

6. Use according to one of the preceding claims wherein the acidic foodstuff is selected from fruits, vegetables, canned foodstuffs, especially canned fruits, canned fish, canned vegetables, bakery products, cake, ready to serve meals, and dairy products, as yogurt and buttermilk.

7. Use according to one of claims 1-5, wherein the acidic foodstuff is a beverage.

8. Use according to claim 7 wherein the beverage has a pH of 6 or below.

9. Use according to claim 7 wherein the beverage has a pH of 3.5 or below.

10. Use according to one of claims 7-9 wherein the beverage is a clear beverage.

11. Use according to one of claims 7-10 wherein the beverage is selected from fruit juices, energy drinks, lemonades, sherbets, sodas, soft drinks, and flavored waters.

12. Acidic foodstuff comprising alternan as degradation-resistant ingredient.

13. Acidic foodstuff according to claim 12 wherein the alternan is an alteman-polysaccharide

14. Acidic foodstuff according to claim 12 wherein the alternan is an alteman-oligosaccharide.

15. Acidic foodstuff according to claim 14 wherein the alternan-oligosaccharide is produced by the reaction of sucrose with an acceptor molecule in presence of alternansucrase enzyme.

16. Acidic foodstuff according to claim 15 wherein the acceptor molecule is selected from maltose, isomaltose, maltitol, isomaltotriose and methyl-α-D-glucan.

17. Acidic foodstuff according to one of claims 12-16, wherein the acidic foodstuff is selected from fruits, vegetables, canned foodstuffs, especially canned fruits, canned fish, canned vegetables, bakery products, cake, ready to serve meals, and dairy products, as yogurt and buttermilk.

18. Acidic foodstuff according to one of claims 12-16 which is a beverage.

19. Acidic foodstuff according to claim 18 which is a beverage having a pH of 6 or below.

20. Acidic foodstuff according to claim 18 which is a beverage having a pH of 3.5 or below.

21. Acidic foodstuff according to one of claims 18-20 which is a clear beverage.

22. Acidic foodstuff according to one of claims 18-21 which is selected from fruit juices, energy drinks, lemonades, sherbets, sodas, soft drinks, and flavored waters.

23. Acidic foodstuff according to one of claims 12-21 comprising alternan in an amount of 0.1-10 weight-% based on the total weight.
